# EUROPEAN PATENT SPECIFICATION

(11) **EP 1 251 726 B1**
(45) Date of publication and mention of the grant of the patent: **23.03.2005**
(21) Application number: 01901628.6
(22) Date of filing: 08.01.2001
(51) Int. Cl.: A01B 11/00, A01B 15/02

(54) **RESILIENT SUPPORT BETWEEN PLOUGH FRAME AND LOWER MOLDBOARD**
ELASTISCHE STÜTZE ZWISCHEN PFLUGGESTELL UND UNTERSTEM STREICHBLATT
SUPPORT ELASTIQUE ENTRE BATI DE CHARRUE ET LAME INFERIEURE

(30) Priority: 11.01.2000 SE 0000046
(43) Date of publication of application: 30.10.2002
(73) Proprietor: Blaxta AB, 611 36 Nyköping (SE)
(72) Inventor: KARLSSON, Rune, S-611 95 Nyköping (SE)
(74) Representative: Karlsson, Leif Karl Gunnar
(86) International application number: PCT/SE2001/000021
(87) International publication number: WO 2001/050834

(56) References cited:
- DE-C- 288 845
- US-A- 4 932 475
- US-A- 5 191 941

## Description

### FIELD OF INVENTION

The present invention relates to a soil or earth processing plough that includes a frame structure which carries comprises an upper frame with a land side and plough shares and an upper and a lower moldboard for working furrows that have been formed in the ground, and a rubber block disposed between the upper frame and the lower mouldboard, a front attachment is provided between the lower moldboard and the land side of the upper frame.

### BACKGROUND OF THE INVENTION

The working method of a plough has been developed to process furrows or ridges that contain straw and plant residues. However, successively greater demands are being placed on soil processing, where the ridges are tightly compacted and loosening of the soil required to achieve a desired result has been omitted. Constructions that include an upper and a lower moldboard that turn the ridge completely in its own furrow are known to the art. Such constructions, however, fail to fully solve the problems associated with earlier known ploughs. The "frame structure" is, in truth, two frames, which comprise the main frame, designated the upper frame, which is attached to the plough ridge that extends up to the tow bar of the tractor. The other frame is designated the lower frame and is attached to the planar part of the upper frame, said planar part also being known as the frame land side. The lower frame has two fastening points, a front point and a rear point.

It is necessary for each plough construction to take into account the large forces to which each ground-working element is subjected to, particularly when stones are present in the earth or soil being worked.

Shares, moldboards and land sides are therefore always carefully screwed securely, which is a probable reason for the poor loosening of the soil that occurs.

### SUMMARY OF THE INVENTION

The present invention aims to provide a solution to the aforesaid problems and other closely associated problems, and is characterised in that the front attachment is provided with a pivot joint that enables vertical movement between the upper frame and the lower moldboard, i.e. vibrating of the moldboard in a vertical direction during ploughing. The front attachment for the lower moldboard is thus made pivotally movable, suitably by screwing a plate in existing holes intended for attachment of the lower moldboard to the frame.

As a result of the vibrations occurring generally vertically with respect to the lower moldboard as the ground is ploughed, the earth is loosened or broken up very effectively, i.e. the vibrations shake the ridge so as to achieve effective loosening of the earth, while achieving a strong plough construction. This vibratory movement is obtained as a supplement to the vibratory movement of the frame itself that occurs when ploughing, even with earlier known plough constructions.

### DESCRIPTION OF THE DRAWINGS

The invention is illustrated in the accompanying drawings, where Figure 1 is a side view of the plough part concerned; and Figure 2 is a plan view. Figure 3 illustrates part of the support between the lower moldboard and the land side of the frame.

### DESCRIPTION OF AN EXEMPLIFYING EMBODIMENT

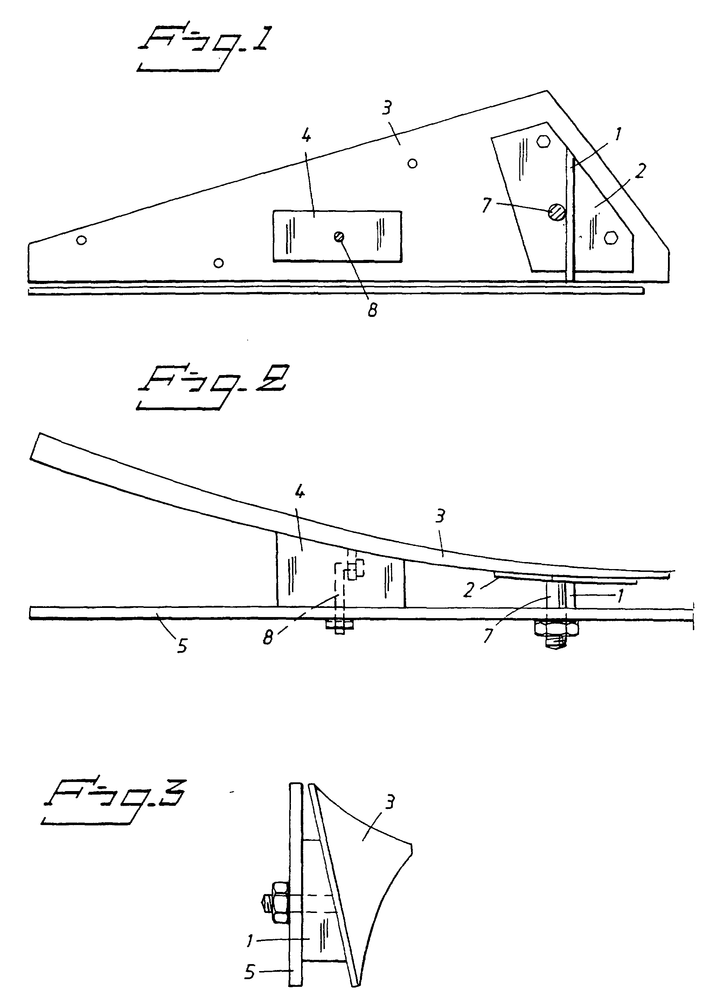

The front attachment (1, 2) for the lower moldboard (3) is made pivotally movable, by screwing a plate (2) into existing holes intended for the attachment of the lower moldboard (3) to the upper frame; see Figures 1 and 2. A support (1) is welded on the plate (2) at 90 degrees to the frame of the lower moldboard, having a vertical inclination of 13 degrees. A strong joint (7) is welded to the inclined support and passes through the planar land side (5) on the upper frame.

The rear attachment for the lower moldboard (3) passes via screw (8) through a rubber block (4) measuring 200x 100 mm and designed to resist pressure against the land side but to be flexible when subjected to vertical forces.

The hardness of the rubber block (4) ranges from 70 shore to 55 shore and controls the ability of the lower moldboard (3) to vibrate when moved forwards against the constantly irregular undersurface. The lighter the earth (soil), the softer the rubber block, and the stiffer the earth, the harder the rubber block, etc. The hardness of the rubber block can be varied by means of its screw (8), so as to enable the block to be adjusted with respect to the quality of the earth concerned and its stone content.

Figure 3 is a view that illustrates the placement of the support (1) between the upper frame and the lower moldboard (3).

The above described arrangement can be varied in many ways within the scope of the accompanying Claims.

## Claims

1. An earth-working plough comprising a frame structure which comprises an upper frame with a land side (5) and carries shares and an upper and a lower moldboard for working formed ridges or furrows, and a rubber block (4) disposed between the upper frame and the lower moldboard (3), a front attachment is provided between the lower moldboard (3) and the land side (5) of the upper frame, **characterised in that** the front attachment is provided with a joint which enables vertical movement to be obtained between the upper frame and the lower moldboard (3), i.e. vertical vibratory movement of the moldboard occurring when ploughing.

2. A plough according to Claim 1, **characterised in that** the joint includes a shaft (7) fastened to the lower moldboard passing through a hole in the land side (5) of the frame and enabling rotary movement to take place between frame and the lower moldboard and therewith vibratory movement between these elements.

3. A plough according to Claim 1, **characterised in that** there is fastened to the lower moldboard (3) at about 90 degrees thereto a support (1) that extends towards the land side of the frame.

4. A plough according to Claim 1, **characterised in that** the rubber block (4) fastened to a rear attachment has an adjustable hardness, i.e. varying flexibility, for adaptation to soil or earth of different natures.

5. A plough according to Claim 2, **characterised in that** the shaft (7) is fastened to a plate (2) screwed in existing holes for the attachment of the lower moldboard to the upper frame.

## Patentansprüche

1. Pflug für Erdarbeiten, mit einer Rahmenstruktur, welche ein oberes Gestell mit einer Schleifsohle (5) aufweist und Pflugscharen sowie ein oberes und unteres Streichblatt zum Formen von Haufen und Furchen trägt, und einem Gummiklotz (4), der zwischen dem oberen Gestell und dem unteren Streichblatt (3) angeordnet ist, wobei eine vordere Befestigung zwischen dem unteren Streichblatt (3) und der Schleifsohle (5) des oberen Gestells vorgesehen ist, **dadurch gekennzeichnet,**
**dass** die vordere Befestigung mit einem Gelenk ausgestattet ist, welches es ermöglicht, vertikale Bewegungen zwischen dem oberen Gestell und dem unteren Streichblatt (3) zu erzielen, z.B. vertikale Vibrationsbewegungen des Streichblattes beim Pflügen.

2. Pflug nach Anspruch 1,
**dadurch gekennzeichnet,**
**dass** das Gelenk einen Bolzen (7) aufweist, der an dem unteren Streichblatt befestigt ist, und der durch ein Loch in der Schleifsohle (5) des Gestells hindurchreicht und Rotationsbewegungen zwischen dem Gestell und dem unteren Streichblatt ermöglicht und somit Vibrationsbewegungen zwischen diesen zwei Bauteilen.

3. Pflug nach Anspruch 1,
**dadurch gekennzeichnet,**
**dass** eine Stütze (1), die sich bis zur Schleifsohle des Gestells fortsetzt, am unteren Streichblatt (3) in einem Winkel von ungefähr 90° angebracht ist.

4. Pflug nach Anspruch 1,
**dadurch gekennzeichnet,**
**dass** der Gummiklotz (4), welcher an einer hinteren Befestigungsstelle angebracht ist, eine einstellbare Härte hat, z.B. eine veränderliche Flexibilität zur Anpassung an A-ckerland oder Boden unterschiedlicher Art.

5. Pflug nach Anspruch 2,
**dadurch gekennzeichnet,**
**dass** der Bolzen (7) auf einer Platte (2) befestigt ist, welche in vorhandene Löcher zur Befestigung des unteren Streichblattes am oberen Gestell geschraubt ist.

## Revendications

1. Charrue utilisée pour travailler la terre, comprenant un bâti qui comprend un cadre supérieur comportant un contre-sep (5) et porte des socs et un versoir supérieur et inférieur pour travailler des billons ou des sillons, et un bloc de caoutchouc (4) disposé entre le cadre supérieur et le versoir inférieur (3), une fixation avant étant prévue entre le versoir inférieur (3) et le contre-sep (5) du cadre, **caractérisée en ce que** la fixation avant est équipée d'un joint permettant d'obtenir un mouvement vertical entre le cadre supérieur et le versoir inférieur (3), c'est-à-dire un mouvement vibratoire vertical du versoir, en cours de labour.

2. Charrue selon la revendication 1, **caractérisée en ce que** le joint comprend une tige (7) fixée au versoir inférieur, passant par un trou ménagé dans le contre-sep (5) du cadre et permettant la rotation entre le cadre et le versoir inférieur et, ainsi, le mouvement vibratoire entre ces éléments.

3. Charrue selon la revendication 1, **caractérisée en ce qu'**est fixé au versoir inférieur (3), à approximativement 90 degrés par rapport à celui-ci, un support (1) qui s'étend en direction du contre-sep du cadre.

4. Charrue selon la revendication 1, **caractérisée en ce que** le bloc en caoutchouc (4) fixé à une fixation arrière présente une dureté réglable, c'est-à-dire une flexibilité variable, pour s'adapter à des sols ou à de la terre de natures différentes.

5. Charrue selon la revendication 2, **caractérisée en ce que** la tige (7) est fixée à une plaque (2) vissée dans des trous existants pour assurer la fixation du versoir inférieur sur le cadre supérieur.
